# EUROPÄISCHE PATENTSCHRIFT

(11) **EP 2 484 434 B1**
(45) Veröffentlichungstag und Bekanntmachung des Hinweises auf die Patenterteilung: **23.10.2019**
(21) Anmeldenummer: 12000742.2
(22) Anmeldetag: 03.02.2012
(51) Int. Cl.: B01J 3/04, B01J 8/10, C10L 9/08

(54) **KONTINUIERLICHER REAKTOR ZUR HYDROTHERMALEN KARBONISIERUNG**
CONTINUOUS HYDROTHERMAL CARBONIZATION REACTOR
RÉACTEUR CONTINU DE CARBONISATION HYDROTHERMALE

(30) Priorität: 05.02.2011 DE 102011010573
(43) Veröffentlichungstag der Anmeldung: 08.08.2012
(73) Patentinhaber: GRENOL IP GmbH, 40882 Ratingen (DE)
(72) Erfinder: Hofer, Lothar, 42489 Wülfrath (DE); Boye, Jan, 42115 Wuppertal (DE)
(74) Vertreter: Weisbrodt, Bernd

(56) Entgegenhaltungen:
- EP-A1- 1 005 903
- EP-A2- 0 045 931
- WO-A1-2008/095589
- WO-A1-2008/120662
- WO-A1-2009/127727
- WO-A2-2008/138637
- WO-A2-2011/117837
- DE-A1-102008 028 953
- US-A1- 2010 184 176

## Beschreibung

Die bisher realisierten und schutzrechtlich angemeldeten HTC Reaktoren (HTC: Hydro-Thermale Carbonisierung) sind im Wesentlichen als Chargen-Reaktoren aufgebaut.

Die US 20100184176 A1 offenbart eine hydrothermale Zersetzungsvorrichtung für Biomasse umfassend: eine Biomasse-Zuführung, die Biomasse-Material unter Normaldruck bis unter erhöhtem Druck zuführt; eine hydrothermale Zersetzungsvorrichtung, die es ermöglicht, das zugeführte Biomasse-Material allmählich innerhalb eines Vorrichtungs-Hauptkörpers von beiden Enden davon in einem konsolidierten Zustand zu bewegen und die es auch ermöglicht, heißes Druckwasser von einem anderen Ende eines Zuführabschnitts für das Biomasse-Material in den Hauptkörper einzuführen, um das Biomasse-Material und das heiße Druckwasser gegenläufig miteinander in Kontakt zu bringen und einer hydrothermalen Zersetzung zu unterziehen, und das eine Ligninkomponente und eine Hemicellulosekomponente in das heiße Druckwasser eluiert, um die Ligninkomponente und die Hemicellulosekomponente vom Biomasse-Material zu trennen; und einen Biomasseentlader, der von der Seite, auf der das heiße komprimierte Wasser in den Vorrichtungshauptkörper eingespeist wird, einen festen Biomasse-Rückstand unter erhöhtem Druck bis unter Normaldruck ableitet. Die WO 2008/120662 A1 offenbart eine hocheffiziente kontinuierliche hydrothermale Reaktionsvorrichtung zur Biomassebehandlung, die die Trennung von Bestandteilen der Biomasse als nützliche Ressourcen realisiert sowie ein Verfahren zum Steuern dieser Vorrichtung. Die kontinuierliche hydrothermale Reaktionsvorrichtung ist eine kontinuierliche hydrothermale Hochdruckreaktionsvorrichtung, welche eine Materialversorgungseinheit umfasst, die aus einem Materialpulverisierungskneter, einer Schlammpumpe, die in der Lage ist, eine Materialtransportgeschwindigkeit zu steuern, und einer Lösungsmittelzufuhrpumpe besteht; einem Rohrreaktor aus korrosionsbeständigem Metall, dessen Temperatur durch einen mehrstufigen Temperaturerhitzer und einen isothermischen Erhitzer und einen Kühler vom Typ Wasserkühlung gesteuert wird; und einer Materialausstoßeinheit, die aus einem Duplex-Magnetverschlussventil besteht, das in seiner Mitte mit einer Druckpufferkammer versehen ist, wobei im Rohrreaktor die Biomasse streng kontrollierten hydrothermalen Hochdruckreaktionsbedingungen ausgesetzt ist.

Die EP 1 005 903 A1 offenbart ein Verfahren und Vorrichtung zur Behandlung von Substanzen durch Koexistieren einer Objektsubstanz mit Wasser, das bei einer Temperatur über 200 °C gehalten wird, um chemische Reaktionen wie das Trennen von Molekülketten, Rekombination und Entkopplung von verschlossenen Molekülen, Oxidations- und Reduktionsreaktionen durchzuführen. Eine Mischphase, die ein Objekt und ein flüssiges Medium enthält, wird in der überkritischen Reaktionsvorrichtung dem überkritischen Zustand des Mediums unterworfen, wobei am oberen Ende Zuführungen und am unteren Ende ein Produktauslass vorgesehen sind. Im Inneren der Vorrichtung ist die überkritische Zone oben und die unterkritische Zone unten vorgesehen, und die Objektsubstanz und die Reaktionsprodukte werden in eine Richtung zum unteren Ende der Reaktionskammer geführt.

Die EP 0 045 931 A2 offenbart ein kontinuierliches Verfahren zur Herstellung eines Vinylchloridpolymerisates durch Homo-, Co- oder Pfropfpolymerisation von Vinylchlorid in wäßriger Suspension in Gegenwart eines oder mehrerer radikalisch zerfallender Aktivatoren, oberflächenaktiver Stoffe und weiterer Zusatzstoffe, in mindestens zwei Reaktionszonen, in denen die Polymerisationsmischung so weit in Bewegung gehalten wird, dass sich das gebildete Polymere nicht absetzt, wobei in der ersten Reaktionszone bis zu einem Umsatz von höchstens 10 Gew.-%, bezogen auf eingesetzte Monomere, polymerisiert wird, nach Verlassen der letzten Reaktionszone abgekühlt, entspannt und von nicht umgesetzten Monomeren befreit und nach Abtrennung der Hauptmenge der wässrigen Flotte zu einem trockenen Polymerpulver verarbeitet wird, wobei in allen Reaktionszonen eine Pfropfenströmung der Polymerisationsmischung aufrechterhalten wird, in der ersten Reaktionszone die Polymerisationsmischung in einer für die Einstellung der angestrebten Kornmorphologie ausreichenden Weise bewegt wird und insbesondere in der zweiten Reaktionszone das Entstehen von Polymerbelägen an den Oberflächen die mit der Polymerisationsmischung, in Berührung kommen, verhindert wird.

Die WO 2008/138637 A2 offenbart ein Verfahren der Prozessführung einer Anlage zur hydrothermalen Karbonisierung von Biomasse inklusive der Trennung und Nutzung der Produkte sowie eine entsprechende Vorrichtung. Dies beinhaltet ein Verfahren und eine Vorrichtung zur Steuerung der Vorwärmung von Biomasse und Kühlung einer Reaktion zur hydrothermalen Karbonisierung (HTC) von Biomasse, wobei einem HTC-Reaktor über wenigstens ein druck- und/oder temperaturgesteuertes Ventil Wasserdampf entnommen wird, welcher anschließend für die Vorwärmung genutzt werden kann. Ferner beinhaltet dies ein Verfahren zur Trennung des Produktgemisches im Anschluss an eine hydrothermale Karbonisierungsreaktion in einer HTC-Anlage ohne vorherige Entspannung auf Umgebungsdruck, um die Trennung effizient durchführen zu können und das separierte Wasser im Kreis führen und wieder nutzen zu können.

Die DE 10 2008 028 953 A1 offenbart ein Verfahren zur Herstellung von Pflanzenkohle mittels Hydrothermaler Carbonisierung (HTC) aus Biomasse jedweder Art durch Zerkleinern, Fluten in einer wässrigen Lösung, Beigeben eines chemischen Katalysators, Einfüllen in einen Reaktionsbehälter, Druckanhebung und Aufheizung sowie Temperaturhaltung während einer längeren Reaktionsphase mit anschließender Abkühlung der wässrigen Lösung, Trennung der Kohlepartikel vom Reaktionswasser, dadurch gekennzeichnet, dass der Prozess in einem auf durchgehend hohem Druckniveau gehaltenem, aber intermittierend betriebenen Reaktionsbehälter abläuft, indem ein dem Reaktionsbehälter vorgeschalteter und über diesem angeordneter Vorwärmbehälter drucklos befüllt wird und nach Flutung bei geschlossenem Einfüllventil durch Öffnen des Austrittsventils in einen Druckausgleich mit dem Reaktionsbehälter eintritt, das vorgewärmte Einsatzmaterial mittels Schwerkraft und hilfsweise mit Spülpumpenunterstützung in den Reaktionsbehälter transportiert wird.

Die WO 2009/127727 A1 offenbart ein hydrothermales Karbonisierungsverfahren zur Herstellung von kohleähnlichem Material unter Verwendung von Biomasse, umfassend einen Schritt (i) des Erwärmens eines Reaktionsgemischs, das Wasser und Biomasse umfasst, um ein Reaktionsgemisch zu erhalten, das aktivierte Biomasse umfasst; und einen Schritt (ii) des Hinzufügens eines Polymerisationsinitiators zu dem in Schritt (i) erhaltenen Reaktionsgemisch, um die aktivierte Biomasse zu polymerisieren und ein Reaktionsgemisch zu erhalten, das kohleähnliches Material umfasst.

Die WO 2008/095589 A1 offenbart ein Verfahren und eine Vorrichtung zur hydrothermalen Karbonisierung von Biomasse, wobei Biomasse mit Wasser und wenigstens einem Katalysator in einem Druckbehälter durch Temperatur- und/oder Druckerhöhung in Stoffe wie Kohle, Öl und/oder dergleichen artverwandte Stoffe umgewandelt wird. Um die hydrothermale Karbonisierung von Biomasse zu verbessern, wird dabei vorgeschlagen, dass einem im Wesentlichen als Rohrleitung mit wenigstens einer steuerbaren Einlassöffnung und wenigstens einer steuerbaren Auslassöffnung ausgebildeten Druckbehälter über die wenigstens eine steuerbare Einlassöffnung Biomasse, Wasser und/oder wenigstens ein Katalysator zugeführt wird, die Temperatur- und/oder Druckverhältnisse in dem Druckbehälter derart gesteuert werden, dass dem Druckbehälter zugeführtes Füllgut aus Biomasse, Wasser und Katalysator in der Rohrleitung transportiert wird, wobei Biomasse, Wasser und Katalysator miteinander reagieren, und über die wenigstens eine steuerbare Auslassöffnung wenigstens ein Reaktionsprodukt des Füllguts entnommen wird.

Die WO 2011/117837 A2 offenbart einen Laminarstromreaktor zur Herstellung von Hydrokohle aus einem Fest-Flüssigkeitsgemisch aus Wasser und einer kohlenstoffhaltigen Komponente, wobei das Fest-Flüssigkeitsgemisch bei einer Temperatur von 0-300°C und einem Druck von 5 - 70 bar behandelt wird, aus Rohrreaktoreneinheiten mit weitgehend vertikalen Halteabschnitten und richtungswechselnden Umlenkern besteht, wobei die Halteabschnitte von dem Fest-Flüssigkeitsgemisch langsamer durchströmt werden als die übrigen Rohrabstände, da sie größere Durchmesser aufweisen.

Eine erweiterte Idee ist, diese Reaktoren so aufzubauen, dass sie in mehrere untereinander verbundene Chargenreaktoren aufgeteilt werden. So ist ein Reaktortyp bekannt, bei dem drei Druckbehälter in Reihe angeordnet sind und der Prozess der Karbonisierung jeweils in den voneinander durch Armaturen getrennten Druckreaktoren fortschreiten kann. Das hat den großen Vorteil, dass man hiermit Heizenergie einsparen kann, da immer nur der erste Reaktor auf Reaktionstemperatur gebracht werden muss und danach der Prozess selber als exothermer Prozess weiterlaufen kann. Die überschüssige Wärme aus den nachfolgenden Reaktoren wird dabei für das Anwärmen der Biomasse vor und im ersten Reaktor genutzt. Die Entleerung und Befüllung der Einzelreaktoren erfolgt in Chargen, angefangen mit der Entleerung des letzten Reaktors, dann der Entleerung des vorangegangenen Reaktors einhergehend mit der Befüllung des letzten Reaktors bis zur Befüllung des ersten Reaktors, der hierfür vorher in den zweiten Reaktor entleert sein muss. Die Trennarmaturen zwischen den Reaktoren dienen dazu, zu verhindern, dass nicht karbonisiertes Biomaterial vorzeitig in den nächsten Reaktor gelangt. Die Reaktoren befinden sich übereinander angeordnet, damit beim Öffnen der Trennarmaturen das zu karbonisierende Material auf natürliche Weise durch Schwerkraft in den nächsten Reaktor gelangt. In den Reaktoren befindet sich jeweils ein Rührwerk, welches zur Homogenisierung dient, den Wärmeübergang beschleunigt und andererseits den Übergabeprozess in den nächsten Reaktor fördert.

Aus dieser Beschreibung ist ersichtlich, dass dieses Verfahren bestenfalls als quasi kontinuierliches Verfahren bezeichnet werden kann.

Aufgabe der Erfindung ist es, einen Apparat bzw. eine Vorrichtung bereitzustellen, der bzw. die es erlaubt, einen kontinuierlich zu betreibenden Prozess zu betreiben.

Diese Aufgabe wird durch einen Reaktor gemäß den Ansprüchen 1 und 2, ein Verfahren gemäß Anspruch 13 und eine Verwendung gemäß Anspruch 15 gelöst.

Im Wesentlichen besteht die beanspruchte Anlage aus einem Reaktor gemäß Anspruch 1 oder 2, in dem der HTC-Prozess während der Verweilzeit erfolgt. Die Biomasse wird vorteilhafter Weise in zerkleinerter Form mittels einer Fördereinrichtung eingebracht und am Ende des Reaktors als Fertigprodukt, insbesondere als Kohle und/oder artverwandte Stoffe und Wasser, mit Hilfe einer Fördereinrichtung wieder ausgebracht.

Entwässerungseinrichtungen, vorteilhafterweise eine vor Eintrag und eine nach Austrag, sorgen dafür, dass so wenig Wasser wie möglich in den Reaktor gelangt und das produzierte Produkt am Ausgang so trocken wie möglich zur Verfügung steht.

Der Reaktor kann somit aus einem Druckbehälter oder entsprechenden Abschnitten bestehen und die Förderung innerhalb des Reaktors wird durch eine Fördereinrichtung, vorteilhafterweise als Ausprägung einer Förderschnecke, sichergestellt mit oder ohne Welle, welche auch die Aufgabe übernimmt, das Biomaterial zu vermischen und die Wärmezu- und -abfuhr zu verbessern. Das Einbringen und Abführen der Wärmeenergie wird vorzugsweise mit Hilfe von Wärmeträger-Fluid von außen über einen Doppelmantel ermöglicht bzw. sichergestellt. Vorteilhafterweise ist die Schnecke mit einer Hohlwelle ausgerüstet, durch das mit Hilfe dieses Wärmeträgers ein Wärmeenergieaustausch stattfinden kann.

Weitere vorteilhafte Ausgestaltungen ergeben sich aus den abhängigen Ansprüchen.

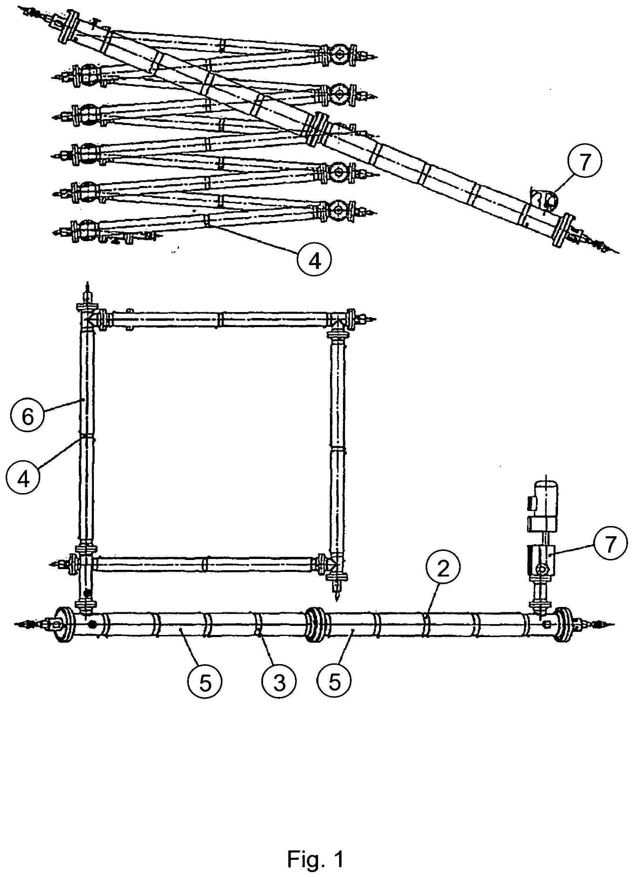

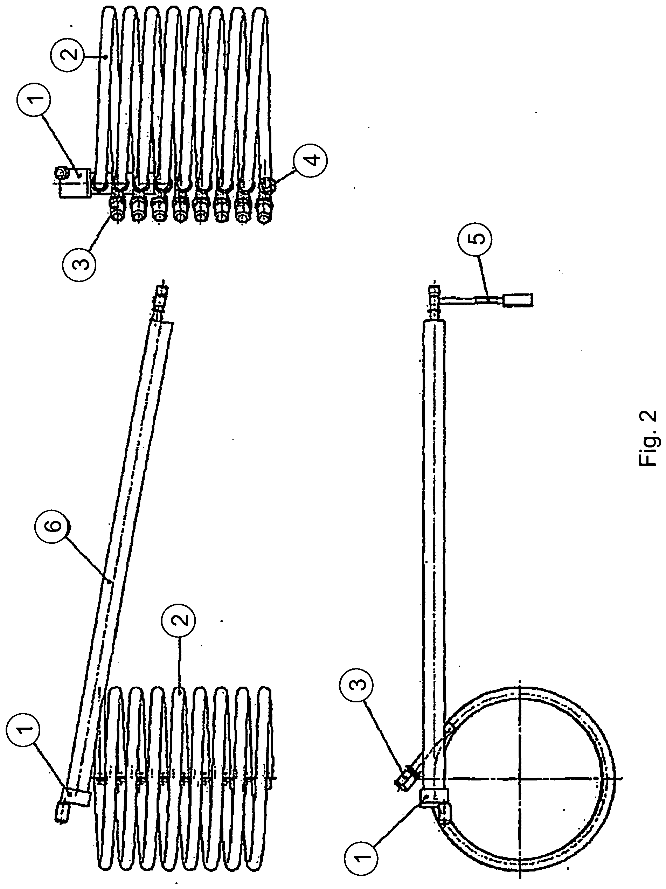

Der Reaktor kann unterschiedliche Formen besitzen:
1. Bei kleinen Durchmessern ist er in einer nicht erfindungsgemäßen Variante als gebogenes Rohr mit einer biegsamen Schneckenwendel als Transportmechanismus ausgebildet. Insgesamt sieht der Reaktor wie eine überdimensionale Schraubenfeder aus, die eine senkrechte Mittellinie besitzt; (siehe Fig. 2)
2. Bei größeren Durchmessern besteht der Reaktor aus geraden Rohrabschnitten, die mit Hilfe von T-Verbindungsstücken miteinander verbunden sind. Vorteilhafterweise besitzt jeder gerade ausgebildete Rohrabschnitt eine Fördervorrichtung, vorteilhafterweise in Ausprägung einer Förderschnecke, die die Aufgaben Transport, Mischen und Wärmeübertragung übernimmt. Der gesamte Reaktor bekommt eine ähnliche Form, wie oben beschrieben (siehe Ziffer 1., mit Fig. 2), nur dass die Schraubenfeder keinen runden sondern quadratischen Querschnitt besitzt; (siehe Fig. 1).

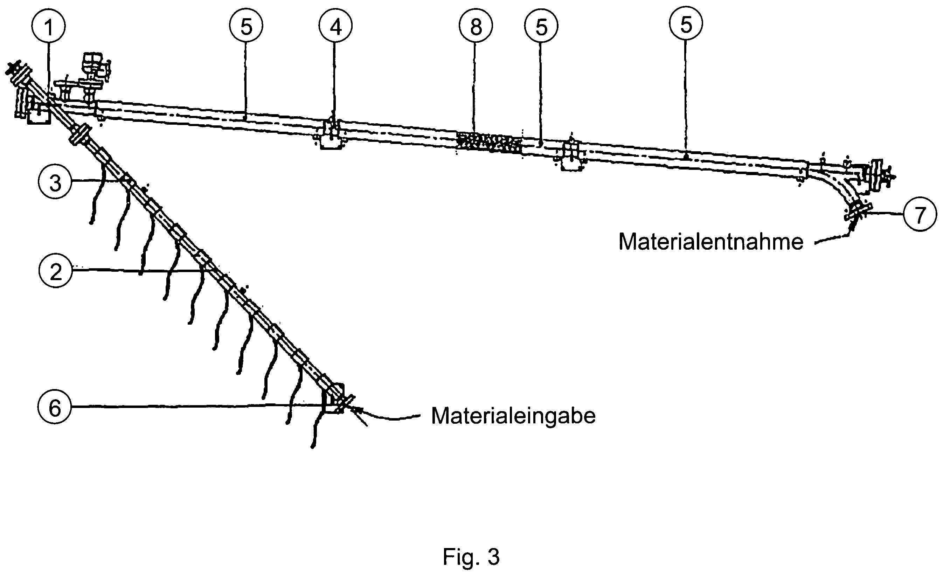

3. Fig. 3 zeigt eine weitere Variante eines kontinuierlich arbeitenden Reaktors mit zwei geraden Reaktorrohrstücken. Es handelt sich um einen Reaktor, bei dem die Aufheizenergie mit Hilfe von elektrisch betriebenen Heizmanschetten eingebracht wird.

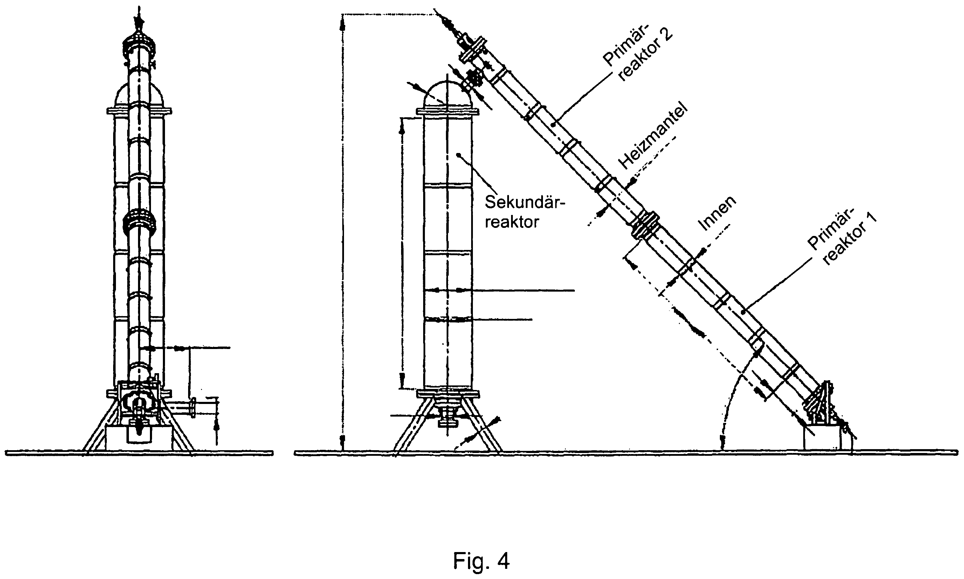

4. Fig. 4 zeigt eine weitere Variante eines kontinuierlich arbeitenden HTC-Reaktors als Kombination aus Rohr- und Druckbehälterreaktor, welche am höchsten Punkt miteinander verbunden sind. Die Aufheizung erfolgt im ansteigend angeordneten Primärreaktor. Im Sekundärreaktor in Form eines Druckbehälters wird überschüssige Wärmeenergie abgenommen und vorzugsweise als Aufheizenergie weiterverwendet.

Beschreibung des neuartigen Reaktors:
Fig. 1, Fig. 2, Fig. 3 und Fig. 4 zeigen diesen Reaktor in verschiedenen Bauformen.

Der Reaktor ist konzipiert als kontinuierlich arbeitender Reaktor. Die Funktionsweise und der Prozess bauen auf bekannten, angemeldeten Schutzanmeldungen und schon erteilter Patente auf.

Die gestellte Aufgabe, die es zu lösen gilt, ist, den Prozess der Karbonisierung kontinuierlich ablaufen zu lassen, ohne den Einbau von Absperrventilen, die zu Wartezeiten, möglichen Havarien und diskontinuierlicher Arbeitsweise führen.

Das wurde erfindungsgemäß dadurch erreicht, dass der Prozess in einem rohrförmigen Reaktor oder einer Kombination aus Rohr- und Druckbehälterreaktor stattfindet, ohne Absperrventile, und vorzugsweise mit jeweils einer Fördereinrichtung für Feststoffe am Eingang und einer hierfür geeigneten Fördereinrichtung am Ausgang, die als Druck- und Entleerschleuse für Flüssigkeiten und Feststoffe gleichermaßen geeignet sind.

Das Anbacken von karbonisiertem Material im Inneren des Reaktors wird dadurch verhindert, dass in dem Teil des Reaktors, in dem der Feststoff überwiegt und die Karbonisierung beginnt, der Reaktor als Rohr ausgebildet ist und ein Rührwerk besitzt, das eine Agglomeration und ein Anbacken verhindert. Die notwendige Wärme wird einerseits von außen mit Hilfe einer Doppelwand, durch die erhitztes Wärmeträger-Fluid fließt, eingebracht, und andererseits von Innen durch die Welle des Rührwerks, welche als Doppelhohlwelle ausgestaltet ist und welche gleichermaßen von Wärmeträger-Fluid durchflossen bzw. -strömt wird.

Das Anbacken im weiteren Teil des Reaktors, der ggf. aus einem quasischraubenförmig ausgebildeten Rohr besteht (siehe Fig. 1 und Fig. 2), wird vorteilhafterweise durch schneckenförmige Rührwerke erreicht, die auch Förderaufgaben übernehmen können. Die Figuren zeigen diese Reaktoren, welche aus geraden oder gebogenen Rohrstücken zusammengesetzt und mit Hilfe von T-Stücken so miteinander verbunden sind, dass es einer Schraubenform ähnelt. Die Schraubenform wurde vorteilhafter Weise gewählt, um Platz bzw. Bauraum zu sparen und Isolierungseinrichtungen kostengünstig halten zu können. Bei diesem Teil des Reaktors wird die Wärme von außen über die Doppelwand eingebracht. Dieselbe Einrichtung eignet sich vorteilhafterweise auch für das Abführen von überschüssiger Wärme, die durch den Prozess erzeugt wird.

Vorteilhafterweise wird der Reaktor so installiert, dass der zu karbonisierende Inhalt im Reaktor so geschichtet ist, dass an der höchsten Stelle auch die höchste Temperatur herrscht. Hierzu wird die Biomasse in den Reaktor bzw. Prozessor eingebracht und bis zur höchsten Stelle aufgeheizt, so dass sie im weiteren Verlauf des Prozesses die Temperatur hält oder abgekühlt wird und beim Verlassen des Reaktors vorteilhafterweise eine Temperatur unter 100 °C aufweist, damit eine schlagartige Verdampfung bei Atmosphärendruck verhindert werden kann.

Fig. 1 zeigt eine komplette Anlage mit Fördereinrichtung (1) die den Feststoff bei hohem, über Reaktionsdruck liegendem Druck in den Prozessor fördert. Dieses Material wird in den ersten Teil des Reaktors (2) gefördert. Hier wird es auf Reaktionstemperatur, vorteilhafterweise zwischen 160°C und 230 °C, aufgeheizt und vorteilhafterweise gemischt. Der Fördervorgang in den weiteren Teil des Reaktors (4) wird im Wesentlichen mittels hier nicht sichtbarer Fördereinrichtung (3) im inneren des ersten Teils des Reaktors (2), mittels der Fördervorrichtung (1) und der Fördereinrichtung (7) am Ende des Weiteren Teils des Reaktors (4) und deren Fördereinrichtung besorgt. Die beiden Fördereinrichtungen (1, 7), die das Material ein- und ausbringen, fördern vorteilhafter Weise synchron.

Der weitere Teil des Reaktors (4) ist in gerade Rohrstücke aufgeteilt, um diese besser produzieren bzw. fertigen zu können, die Einzelabschnitte besser transportieren und montieren zu können, und um Mischwerkzeuge gut ein- bzw. ausbauen und warten zu können.

Das Mischwerkzeug besteht für einen aus gebogenen Rohren hergestellten Reaktor (siehe Fig. 2), aus
einer vorteilhafterweise biegsamen Schnecke, welche vorzugsweise gleichsam wie eine Schraubenfeder gewickelt ist; oder
einer vorteilhafterweise aus einer biegsamen Welle, auf der einzelne Misch-, Rühr- oder Förderelemente montiert sind, die einerseits fördern, mischen und/oder die Oberfläche des Reaktors säubern können.

Der Antrieb dieser Förder- bzw. Mischwerkzeuge erfolgt vorteilhafterweise mit Hilfe von Elektrogetriebemotoren, deren Wellen in den Mischraum ragen und mit Hilfe von Wellendichtungen nach außen abgedichtet sind. Diese Dichtungen können vorteilhafterweise als Stopfbuchsdichtungen ausgeführt werden oder als Gleitringdichtungen, die komfortabler und langlebiger sind.

Das Mischwerkzeug besteht für einen aus geraden Rohren hergestellten Reaktor (siehe Fig. 1 und Fig. 3), aus einer vorteilhafterweise starren Schnecke mit zentraler Welle.

Der Antrieb dieses Förder- bzw. Mischwerkzeugs erfolgt vorteilhafterweise mit Hilfe von Elektrogetriebemotoren oder Kettenantrieben, deren Wellen in den Mischraum ragen und mit Hilfe von Wellendichtungen nach außen abgedichtet sind. Diese Dichtungen können vorteilhafterweise sowohl als Stopfbuchsdichtungen ausgeführt werden oder, komfortabler und langlebiger, als Gleitringdichtungen.

Am Ende des Reaktors ist die Fördereinrichtung (7) angeordnet, die gezielt und kontinuierlich das Gemisch aus Wasser und Kohle oder artverwandter Stoffe aus dem System heraus fördert. Die Fördereinrichtungen sind in der Lage, auch schwierige Güter zu fördern, wie zum Beispiel Sand oder kleine Steine. Das sind Materialien, die in den Bio-Reststoffen enthalten sein können, zum Beispiel bei Grünschnitt oder Klärschlamm als Eingabematerial.

Der Wärmeträger, welcher durch die Doppelmäntel (5, 6) fließt, entnimmt Restwärme, die weiter genutzt oder dem Prozess zurückgeführt werden kann.

Fig. 2 zeigt einen kontinuierlich arbeitenden HTC-Reaktor bei dem die Reaktorrohrstücke (2) in gebogener Schraubenform ausgebildet und jeweils mit einer biegsamen und wellenlosen, hier nicht sichtbaren Fördereinrichtung ausgerüstet sind.

Der Eingangsteil des Reaktors (6) ist gerade ausgebildet und schließt an den schraubenförmigen Teil des Reaktors an.

Der Antrieb (1) der Misch- und Fördereinrichtung (hier nicht dargestellt) fördert das Bio-Material vom Eingang (5) in den weiteren gebogenen Teil des Reaktors (2). Die Übergabe findet vorteilhafterweise an der höchsten Stelle des Reaktors statt.

Der schraubenförmige Teil des Reaktors (6) besteht aus Einzelteilen, die jeweils ein 360° Rohrstück ausmachen in dem jeweils eine mit dem Antrieb (3) versehene Misch- und Fördereinrichtung enthalten ist.

Am Ausgang des Reaktors (4) ist die Druckschleuse (hier nicht dargestellt).

Fig. 3 zeigt einen kontinuierlich arbeitenden Laborreaktor, der sich aus zwei geraden Rohrstücken zusammensetzt, die jeweils mit einer hier nicht dargestellten Fördereinrichtung (8) ausgerüstet sind.

Die Rohrstücke gehen an der Verbindungsstelle (1) ineinander über und die Fördereinrichtung des Eingangsrohres ragt in den Raum des zweiten Rohres hinein, wo das Gut von der zweiten Fördereinrichtung erfasst und weitertransportiert wird.

Das Eingangsrohr (2), und damit sein Inhalt, werden mit Hilfe externer Wärme, vorteilhafterweise mittels Heizmanschetten (3), auf Reaktionstemperatur erhitzt. Das zweite Rohr (4) ist mit drei Doppelmantelabschnitten (5) versehen, durch die Wärmeträger-Fluid fließt und für einen Abtransport der Wärmesorgen kann.

Die Fördereinrichtungen am Eingang (6) und Ausgang (7) sind hier nicht explizit dargestellt.

Fig. 4 zeigt einen kontinuierlich arbeitenden Reaktor, der aus einem rohrförmig aufsteigend gestalteten Primärreaktor und einem daran angeschossenen, in Form eines Druckbehälters ausgestalteten Sekundärreaktor besteht.

In den Primärreaktor wird das zu karbonisierende Biomaterial kontinuierlich mittels Hochdruckpumpe gefördert. Die Förderung wird mit Hilfe einer sich im Inneren dieses Reaktorteils befindlichen Schnecke unterstützt. Die Schnecke bewirkt dabei gleichzeitig eine Mischung des Biomaterials. Gleichzeitig wird das Material aufgeheizt, vorteilhafter weise durch Wärmeträgerflüssigkeit, die durch die Doppelwände des Reaktors fließt, so dass vorzugsweise am höchsten Punkt des Reaktors die höchste Temperatur erreicht wird, vorzugsweise etwa 220 °C. Hier gelangt das Material durch eine Abzweigung des Primärreaktors in den Sekundärreaktor, wo der Karbonisierungsprozess weiterläuft.

Während des kontinuierlich verlaufenden Prozesses, sackt das karbonisierte Material durch Schwerkraft nach unten ab und wird vorteilhafterweise kontinuierlich mit Hilfe von Wärmeträgerflüssigkeit abgekühlt. Die höhere Dichte des kühleren Wassers und der entstandenen Kohle fördern diesen Prozess, so dass Vermischungen von nicht karbonisiertem und karbonisiertem Material auf natürliche Weise verhindert werden.

Am unteren Teil des Sekundärreaktors wird das Kohle-Wasser-Gemisch vorteilhafterweise bei einer Temperatur von unter 100 °C mittels einer Schleuse, vorzugsweise einer Verdrängerpumpe, ausgetragen.

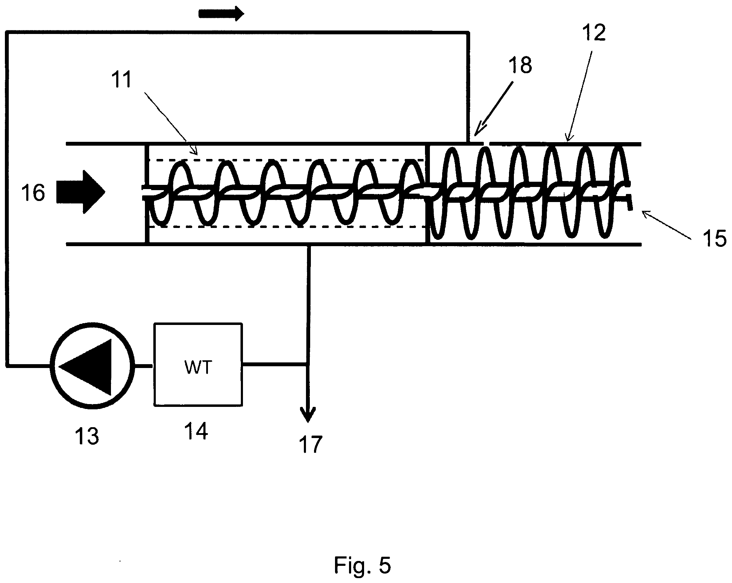

Eine erfindungsgemäße Modifizierung des Reaktorrohres führt vorteilhafterweise zu einer weiteren deutlichen Steigerung der Wirtschaftlichkeit des Reaktors (siehe Fig. 5).

Dazu wird in einem Teilbereich des Reaktorrohres (12) ein zylinderförmiges Sieb, vorzugsweise ein Spaltsieb, besonders bevorzugt ein Lochsieb, im Besonderen bevorzugt ein Gewebesieb, (Bezugszeichen 11 in Fig. 5) installiert. Der Abstand der Sieboberfläche zur Reaktoroberfläche ergibt sich im Wesentlichen aus dem nachfolgend beschriebenen Volumenstrom.

Die jeweiligen Stirnseiten des zylindrischen Siebes (11) werden mit entsprechend ausgestalteten Stegen dicht mit der Reaktorrohraußenwand verbunden, wobei ein ringförmiger Steg an beiden Seiten des zylindrischen Siebes (11) bündig mit der Reaktoraußenwand abschließt. Weiterhin ist es besonders vorteilhaft, dass eine schneckenförmige Versteifung durch Flachkantstäbe oder sonstigen wickelbaren Profilen außen um das Sieb (11) gewickelt wird und sich an der Innenwand des Reaktoraußenrohres abstützt. Aus dem gebildeten Zwischenraum zwischen Sieb (11) und Reaktorwand wird über eine Rohrleitung (17) durch das Sieb (11) gesiebte Flüssigkeit dem Reaktor (12) entnommen und einem Wärmetauscher (14, WT) zugeführt. Der Wärmetauscher (14, WT) erwärmt die entnommene Flüssigkeit, vorzugsweise über einen Thermoölkreislauf.

Die entnommene und nunmehr erwärmte Flüssigkeit wird mittels einer Pumpe (13) dem Reaktor (12) wieder zugeführt. Der Eintrag der Flüssigkeit erfolgt in Flussrichtung der Biomasse hinter dem installierten Sieb (11) im Reaktor (12) [in Fig. 5 mit dem Bezugszeichen 18 gekennzeichnet].

Der Vorteil dieser Konstruktion des Reaktors ist, dass dem laufenden Prozess Flüssigkeit, insbesondere Wasser, entnommen wird, diese Flüssigkeit auf eine gewünschte Temperatur erhitzt wird und dem Prozess erneut zugeführt wird. In dem Bereich zwischen der Entnahme (Rohrleitung 17) und der Zuführung (Bezugszeichen 18 in Fig. 5) der Flüssigkeit (des Wassers), wird somit eine, vom sonstigen Prozess unabhängige Temperaturzone eingerichtet bzw gehalten. Die im Prozess befindliche Biomasse wird weiter in Flussrichtung (16) transportiert und mittels des umlaufenden Flüssigkeitsstroms (Wasserstroms) kurzfristig aufgeheizt.

Als vorteilhaft hat sich erwiesen, dass eine im Sieb (11) laufende Förderschnecke die Sieboberfläche von Ablagerungen oder entstehenden Filterkuchen befreit. Besonders vorteilhaft ist dabei die Ausgestaltung der Außenkante der innenlaufenden Scheckenwendel mittels einer drahtbürstenähnlichen Ausprägung oder einer vergleichbar gestalteten Abstreifkante.

Ebenfalls ist eine Freihaltung der Sieboberfläche durch eine nicht schneckenförmige Abstreifvorrichtung möglich und sinnvoll.

## Patentansprüche

1. Reaktor zur kontinuierlichen hydrothermalen Karbonisierung von Biomasse beziehungsweise Biomaterial (HTC-Prozess), der rohrförmig aus geraden oder gebogenen Rohrstücken ausgebildet ist, wobei die Rohrstücke mittels rechtwinkeligen oder schrägen T-Stücken in der Form so aneinander angeschlossen sind, dass sie einen fortlaufenden Reaktorkörper bilden und zumindest die Mehrzahl der Rohrstücke Misch- und Fördereinrichtungen aufweist,
**dadurch gekennzeichnet, dass**
der Reaktor in einem Teilbereich eines Reaktorrohres (12) aufweist
- ein zylinderförmiges Sieb (11), welches mittels eines ringförmigen Stegs an beiden Seiten des Siebs (11) bündig mit der Reaktorwand in dem Teilbereich des Reaktorrohres (12) abschließt, und einen Zwischenraum zwischen Sieb (11) und Reaktorwand in dem Teilbereich des Reaktorrohres (12) bildet,
- eine Rohrleitung (17) zur Entnahme von Flüssigkeit aus dem Zwischenraum zwischen Sieb (11) und Reaktorwand in dem Teilbereich des Reaktorrohres (12),
und
- eine Pumpe (13) zur Zuführung (18) entnommener Flüssigkeit, welche in Flussrichtung der Biomasse hinter dem Sieb (11) vorgesehen ist,
wobei der Bereich zwischen der Rohrleitung (17) und der Pumpe (13) als eine vom sonstigen Prozess der hydrothermalen Karbonisierung von Biomasse beziehungsweise Biomaterial (HTC-Prozess) unabhängige Temperaturzone, aufweisend einen Wärmetauscher (14), eingerichtet ist.

2. Reaktor zur kontinuierlichen hydrothermalen Karbonisierung von Biomasse beziehungsweise Biomaterial (HTC-Prozess), der aus einer Kombination von geraden oder gebogenen Rohstücken und einem Druckbehälter ausgebildet ist, wobei die Rohrstücke mittels rechtwinkeligen oder schrägen T-Stücken in der Form so aneinander angeschlossen sind, dass sie einen fortlaufenden Reaktorkörper bilden und zumindest die Mehrzahl der Rohrstücke Misch- und Fördereinrichtungen aufweist,
**dadurch gekennzeichnet, dass**
der Reaktor in einem Teilbereich eines Reaktorrohres (12) aufweist
- ein zylinderförmiges Sieb (11), welches mittels eines ringförmigen Stegs an beiden Seiten des Siebs (11) bündig mit der Reaktorwand in dem Teilbereich des Reaktorrohres (12) abschließt, und einen Zwischenraum zwischen Sieb (11) und Reaktorwand in dem Teilbereich des Reaktorrohres (12) bildet,
- eine Rohrleitung (17) zur Entnahme von Flüssigkeit aus dem Zwischenraum zwischen Sieb (11) und Reaktorwand in dem Teilbereich des Reaktorrohres (12),
und
- eine Pumpe (13) zur Zuführung (18) entnommener Flüssigkeit, welche in Flussrichtung der Biomasse hinter dem Sieb (11) vorgesehen ist,
wobei der Bereich zwischen der Rohrleitung (17) und der Pumpe (13) als eine vom sonstigen Prozess der hydrothermalen Karbonisierung von Biomasse beziehungsweise Biomaterial (HTC-Prozess) unabhängige Temperaturzone, aufweisend einen Wärmetauscher (14), eingerichtet ist.

3. Reaktor nach Anspruch 1 oder Anspruch 2, **dadurch gekennzeichnet, dass** die Misch- und Fördereinrichtungen in Form von Schnecken ausgebildet sind, um das zu karbonisierende Biomaterial weiterzufördern und ein Anbacken an die Reaktorwand zu verhindern, wobei die Misch- und Fördereinrichtungen vorzugsweise in das vorangegangene Reaktorrohr hineinragen.

4. Reaktor nach Anspruch 3, **dadurch gekennzeichnet, dass** die Förder- und Mischeinrichtungen die Form einer starren Schnecke mit Welle besitzen.

5. Reaktor nach Anspruch 3, **dadurch gekennzeichnet, dass** die Förder- und Mischeinrichtungen die Form einer biegsamen Schnecke ohne Welle besitzen.

6. Reaktor nach Anspruch 3, **dadurch gekennzeichnet**, das die Förder- und Mischeinrichtungen eine biegsame Welle besitzen, auf der Misch- und Förderwerkzeuge befestigt sind, vorzugsweise in Form von Paddeln.

7. Reaktor nach einem der Ansprüche 3 bis 6, **dadurch gekennzeichnet, dass** jede Förder- und Mischeinrichtung durch einen außen angeordneten Antrieb angetrieben wird.

8. Reaktor nach einem der Ansprüche 3 bis 7, **dadurch gekennzeichnet, dass** Antriebe der Förder- und Mischeinrichtungen als Kettenantrieb zusammengeschlossen werden, um Synchronisation zu erlangen.

9. Reaktor nach einem der Ansprüche 1 bis 8, **dadurch gekennzeichnet, dass** am Eingang des Reaktors eine Mehrstofffördereinrichtung das zu karbonisierende Biomaterial unter Druck in den Reaktor fördert.

10. Reaktor nach einem der Ansprüche 1 bis 9, **dadurch gekennzeichnet, dass** am Ende des Reaktors eine Druckschleuse das Gemisch von Wasser und karbonisierter Kohle unter Druck wieder herauslässt.

11. Reaktor nach einem der Ansprüche 1 bis 10, **dadurch gekennzeichnet, dass** jeder Reaktorabschnitt mindestens mit einem Doppelmantelabschnitt ausgestattet bzw. versehen ist, welcher zur Wärmeübertragung, mittels Wärmeträger-Fluid, ausgebildet ist.

12. Reaktor nach einem der Ansprüche 4 bis 11, **dadurch gekennzeichnet, dass** Wellen der Fördereinrichtungen als konzentrische Doppelrohre ausgebildet sind, die zur Wärmeübertragung ausgebildet und von Wärmeträger-Fluid durchfliessbar sind.

13. Verfahren zur Schaffung einer regelbaren Temperaturzone durch Heizen und/oder Kühlen innerhalb eines kontinuierlich arbeitenden Reaktors (2, 12) zur kontinuierlichen hydrothermalen Karbonisierung von Biomasse beziehungsweise Biomaterial (HTC-Prozess) nach einem der Ansprüche 1 bis 12, **gekennzeichnet durch** Entnahme von Prozessflüssigkeit mittels einer Rohrleitung (17) aus einem Zwischenraum zwischen Sieb (11) und Reaktorwand in einem Teilbereich eines Reaktorrohres (12), Aufheizen und/oder Abkühlen dieser Prozessflüssigkeit außerhalb des Reaktorrohres (12), und erneutes Einbringen der aufgeheizten und/oder abgekühlten Prozessflüssigkeit in das Reaktorrohr (12) mittels einer Pumpe (13) zur Zuführung (18) entnommener Flüssigkeit.

14. Verfahren nach Anspruch 13, **dadurch gekennzeichnet, dass** das Aufheizen bzw. Abkühlen von Biomasse beziehungsweise Biomaterial in dem Reaktorrohr (12) durch Einbringen von erhitzter bzw. gekühlter Flüssigkeit im Gegenstromprinzip erfolgt.

15. Verwendung eines Reaktors (2, 12) nach einem der Ansprüche 1 bis 12 zur Erhöhung des Trockensubstanzanteils des Reaktions- oder Endprodukts des Reaktors (2, 12), **dadurch gekennzeichnet, dass** die Erhöhung des Trockensubstanzanteils durch Entnahme von Prozessflüssigkeit aus dem Reaktor (2, 12) erfolgt.

## Claims

1. A reactor for the continuous hydrothermal carbonization of biomass or biomaterial (HTC process), which is formed in a tubular manner from straight or curved pipe pieces, wherein the pipe pieces are connected to each other by means of right-angled or inclined T-pieces to give such a form that they form a continuous reactor body and at least the majority of the pipe pieces comprises mixing and conveyor devices,
**characterized in that**
the reactor comprises, in a partial area of a reactor pipe (12),
- a cylindrical sieve (11) which sits flush with the reactor wall in the partial area of the reactor pipe (12) by means of an annular web on both sides of the sieve (11) and thus forms an interspace between the sieve (11) and the reactor wall in the partial area of the reactor pipe (12),
- a pipeline (17) for withdrawing liquid from the interspace between the sieve (11) and the reactor wall in the partial area of the reactor pipe (12),
and
- a pump (13) for supplying (18) the withdrawn liquid, which pump is provided downstream of the sieve (11) in the flow direction of the biomass,
wherein the area between the pipeline (17) and the pump (13) is established as a temperature zone, comprising a heat exchanger (14), that is independent from the other process of the hydrothermal carbonization of biomass or biomaterial (HTC process).

2. A reactor for the continuous hydrothermal carbonization of biomass or biomaterial (HTC process), which reactor is formed by a combination of straight or curved pipe pieces and a pressure vessel, wherein the pipe pieces are connected to each other by means of right-angled or inclined T-pieces to give such a form that they form a continuous reactor body and at least the majority of the pipe pieces comprises mixing and conveyor devices,
**characterized in that**
the reactor comprises, in a partial area of a reactor pipe (12),
- a cylindrical sieve (11) which sits flush with the reactor wall in the partial area of the reactor pipe (12) by means of an annular web on both sides of the sieve (11) and thus forms an interspace between the sieve (11) and the reactor wall in the partial area of the reactor pipe (12),
- a pipeline (17) for withdrawing liquid from the interspace between the sieve (11) and the reactor wall in the partial area of the reactor pipe (12),
and
- a pump (13) for supplying (18) the withdrawn liquid, which pump is provided downstream of the sieve (11) in the flow direction of the biomass,
wherein the area between the pipeline (17) and the pump (13) is established as a temperature zone, comprising a heat exchanger (14), that is independent from the other process of the hydrothermal carbonization of biomass or biomaterial (HTC process).

3. A reactor according to claim 1 or claim 2, **characterized in that** the mixing and conveyor devices are configured in the form of screws, in order to convey the biomaterial to be carbonized and to prevent the material from caking on the reactor wall, wherein the mixing and conveyor devices preferably project into the preceding reactor pipe.

4. A reactor according to claim 3, **characterized in that** the conveyor and mixing devices comprise the form of a rigid screw with a shaft.

5. A reactor according to claim 3, **characterized in that** the conveyor and mixing devices comprise the form of a flexible screw without shaft.

6. A reactor according to claim 3, **characterized in that** the conveyor and mixing devices comprise a flexible shaft, on which mixing and conveyor tools are fixed, preferably in the form of paddles.

7. A reactor according to one of the claims 3 to 6, **characterized in that** each mixing and conveyor device is driven by a drive arranged externally.

8. A reactor according to one of the claims 3 to 7, **characterized in that** drives of the conveyor and mixing devices will be combined as a chain drive, in order to achieve synchronisation.

9. A reactor according to one of the claims 1 to 8, **characterized in that** a multicomponent conveyor device placed at the entry of the reactor conveys the biomaterial to be carbonised under pressure into the reactor.

10. A reactor according to one of the claims 1 to 9, **characterized in that** a pressure lock arranged at the end of the reactor discharges the mixture of water and carbonized coal under pressure.

11. A reactor according to one of the claims 1 to 10, **characterized in that** each reactor section is equipped or provided with at least one double shell section, which is configured for transmitting heat by means of a heat transfer fluid.

12. A reactor according to one of the claims 4 to 11, **characterized in that** shafts of the conveyor devices are configured as concentric double pipes, which are configured for heat transmission and through which a heat transfer fluid can flow.

13. A method for creating a controllable temperature zone by means of heating and/or cooling within a continuously functioning reactor (2, 12) for the continuous hydrothermal carbonization of biomass or biomaterial (HTC process) according to one of the claims 1 to 12, **characterized by** withdrawing process liquid by means of a pipeline (17) from an interspace between the sieve (11) and the reactor wall in a partial area of a reactor pipe (12), heating up and/or cooling down this process liquid outside the reactor pipe (12) and a new introduction of the heated up and/or cooled down process liquid into the reactor pipe (12) by means of a pump (13) for supplying (18) withdrawn liquid.

14. A method according to claim 13, **characterized in that** the heating up or cooling down of biomass or biomaterial in the reactor pipe (12) is carried out by introducing heated up or cooled liquid according to the counter-current principle.

15. A use of a reactor (2, 12) according to one of the claims 1 to 12 for increasing the dry matter content of the reaction or end product of the reactor (2, 12), **characterized in that** the increase of the dry matter content is realized by withdrawing process liquid from the reactor (2, 12).

## Revendications

1. Réacteur destiné à la carbonisation hydrothermale continue de biomasse ou de biomatériau (procédé HTC), qui est formé de manière tubulaire à partir d'éléments de tuyau droits ou courbés, les éléments de tuyau étant reliés les uns aux autre par moyen des pièces en T orthogonales ou inclinées pour obtenir une forme de sorte qu'ils forment un corps de réacteur continu et au moins la majorité des éléments de tuyau comprenant des dispositifs de mélange et de convoyeur,
**caractérisé en ce que**
le réacteur comprend, dans une partie partielle d'un tuyau de réacteur (12) :
- un tamis cylindrique (11), qui se termine de manière affleurée avec la paroi de réacteur dans la partie partielle du tuyau de réacteur (12) par moyen d'une entretoise annulaire sur les deux côtés du tamis (11) et ainsi il est formé un interstice entre le tamis (11) et la paroi de réacteur dans la partie partielle du tuyau de réacteur (12),
- une conduite (17) pour retirer du liquide dans l'interstice entre le tamis (11) et la paroi de réacteur dans la partie partielle du tuyau de réacteur (12).
et
- une pompe (13) pour alimenter (18) le liquide retiré, laquelle pompe est prévue en aval du tamis (11) dans la direction d'écoulement de la biomasse,
dans lequel la zone entre la conduite (17) et la pompe (13) est configurée comme une zone de température, comprenant un échangeur thermique (14), qui est indépendante de l'autre procédé de la carbonisation hydrothermale continue de biomasse ou de biomatériau (procédé HTC).

2. Réacteur destiné à la carbonisation hydrothermale continue de biomasse ou de biomatériau (procédé HTC), lequel réacteur est formé par une combinaison d'éléments de tuyau droits ou courbés et d'un récipient sous pression, les éléments de tuyau étant reliés les uns aux autre par moyen des pièces en T orthogonales ou inclinées pour obtenir une forme de sorte qu'ils forment un corps de réacteur continu et au moins la majorité des éléments de tuyau comprenant des dispositifs de mélange et de convoyeur,
**caractérisé en ce que**
le réacteur comprend, dans une partie partielle d'un tuyau de réacteur (12) :
- un tamis cylindrique (11), qui se termine de manière affleurée avec la paroi de réacteur dans la partie partielle du tuyau de réacteur (12) par moyen d'une entretoise annulaire sur les deux côtés du tamis (11) et ainsi il est formé un interstice entre le tamis (11) et la paroi de réacteur dans la partie partielle du tuyau de réacteur (12),
- une conduite (17) pour retirer du liquide dans l'interstice entre le tamis (11) et la paroi de réacteur dans la partie partielle du tuyau de réacteur (12).
et
- une pompe (13) pour alimenter (18) le liquide retiré, laquelle pompe est prévue en aval du tamis (11) dans la direction d'écoulement de la biomasse,
dans lequel la zone entre la conduite (17) et la pompe (13) est configurée comme une zone de température, comprenant un échangeur thermique (14), qui est indépendante de l'autre procédé de la carbonisation hydrothermale continue de biomasse ou de biomatériau (procédé HTC).

3. Réacteur selon la revendication 1 ou la revendication 2, **caractérisé en ce que** les dispositifs de mélange et de convoyeur sont configurés sous forme de vis pour transporter le biomatériau à carboniser et pour empêcher le dépôt du biomatériau sur la paroi de réacteur, les dispositifs de mélange et de convoyeur faisant de préférence saillie dans le tuyau de réacteur précédent.

4. Réacteur selon la revendication 3, **caractérisé en ce que** les dispositifs de convoyeur et de mélange présentent la forme d'une vis sans fin rigide comprenant un arbre.

5. Réacteur selon la revendication 3, **caractérisé en ce que** les dispositifs de convoyeur et de mélange présentent la forme d'une vis sans fin flexible sans arbre.

6. Réacteur selon la revendication 3, **caractérisé en ce que** les dispositifs de convoyeur et de mélange comprennent un arbre flexible, sur lequel sont fixés des outils de mélange et de convoyeur, de préférence sous forme de pagaies.

7. Réacteur selon l'une des revendications 3 à 6, **caractérisé en ce que** chaque dispositif de convoyeur et de mélange est entraîné par un entraînement disposé à l'extérieur.

8. Réacteur selon l'une des revendications 3 à 7, **caractérisé en ce que** des entraînements des dispositifs de convoyeur et de mélange sont combinés en tant que transmission par chaîne pour obtenir une synchronisation.

9. Réacteur selon l'une des revendications 1 à 8, **caractérisé en ce qu'**un système de convoyeur de plusieurs composants disposé à l'entrée du réacteur transporte le biomatériau à carboniser sous pression dans le réacteur.

10. Réacteur selon l'une des revendications 1 à 9, **caractérisé en ce qu'**un sas disposé au bout du réacteur décharge le mélange composé d'eau et de charbon carbonisé sous pression.

11. Réacteur selon l'une des revendications 1 à 10, **caractérisé en ce que** chaque section de réacteur est équipée ou munie d'au moins une section d'enveloppe double, qui est configurée pour le transfert de chaleur par moyen d'un transporteur calorifique fluide.

12. Réacteur selon l'une des revendications 4 à 11, **caractérisé en ce que** des arbres des dispositifs de convoyeur sont configurés comme des tuyaux doubles concentriques, qui sont configurés pour le transfert de chaleur et qui peuvent être passés par un transporteur calorifique fluide.

13. Procédé destiné à créer une zone de température réglable par moyen de réchauffement et/ou de refroidissement à l'intérieur d'un réacteur fonctionnant en continu (2, 12) pour la carbonisation hydrothermale continue de biomasse ou de biomatériau (procédé HTC) selon l'une des revendications 1 à 12, **caractérisé par** le prélèvement de liquide de procédé par moyen d'une conduite (17) dans un interstice entre le tamis (11) et la paroi de réacteur dans une partie partielle du tuyau de réacteur (12), le réchauffement et/ou le refroidissement de ce liquide de procédé à l'extérieur du tuyau de réacteur (12) et une nouvelle introduction du liquide de procédé chauffé et/ou refroidi dans le tuyau de réacteur (12) par moyen d'une pompe (13) destinée à l'alimentation (18) en liquide prélevé.

14. Procédé selon la revendication 13, **caractérisé en ce que** le réchauffement ou le refroidissement de biomasse ou de biomatériau dans le tuyau de réacteur (12) s'effectue par moyen d'introduction de liquide chauffé ou refroidi selon le principe du contre-courant.

15. Utilisation d'un réacteur (2, 12) selon l'une des revendications 1 à 12 pour augmenter le taux de matière sèche du produit final ou de réaction du réacteur (2, 12), **caractérisée en ce que** l'augmentation du taux de matière sèche s'effectue par moyen d'un prélèvement de liquide de procédé dans le réacteur (2, 12).
